# EUROPEAN PATENT APPLICATION

(11) **EP 3 015 661 A1**
(43) Date of publication of application: **04.05.2016**
(21) Application number: 14190662.8
(22) Date of filing: 28.10.2014
(51) Int. Cl.: F01K 23/10, F22B 1/18, F02C 7/10

(54) **Combined cycle power plant**

(71) Applicant: ALSTOM Technology Ltd, 5400 Baden (CH)
(72) Inventor: Eroglu, Adnan, 5417 Untersiggenthal (CH)
(74) Representative: Bernotti, Andrea

(57) **Abstract**

The present invention generally relates to a combined cycle power plant. More in particular, the present invention relates to a plant where the temperature of the flow of gas exiting the turbine is lowered without the need of employing high cost nickel alloys within the heat recovery steam generator.

## Description

### FIELD OF THE INVENTION

The present invention generally relates to a combined cycle power plant. More in particular, the present invention relates to a plant where the temperature of the flow of gas exiting the turbine is lowered without the need of employing high cost nickel alloys within the heat recovery steam generator.

### BACKGROUND

As well known, in combined cycle power plants, the hot exhaust gas of a gas turbine cycle is conveyed into a heat recovery steam generator which uses the available heat of the exhaust gas to extract energy for running a steam power plant, resulting in an improved overall efficiency when compared to single power plant cycles.

In order to maximize the efficiency of the combined cycle, the temperature of the exhaust gas exiting the gas turbine should be approximately 700°. However, such temperature poses a significant challenge on the steam cycle due to the fact that the heat recovery steam generator would require the installation of high cost nickel alloys, necessary to bear the temperature of the entering flow of gas. In addition, the heat recovery steam generator would require the implementation of thick piping and casing which would result in a reduced operational flexibility.

Possible solutions of the above-mentioned technical problem have been proposed but they are all associated with significant efficiency losses or hazardous materials. These include fuel-reforming of methane with steam and heat to syngas or using heat pipe type of solutions with double heat exchangers and tubes filled with sodium, potassium or caesium. Nevertheless, syngas is known to be difficult to burn due to flashback risk and the reforming is associated with water and energy losses. Alkali metals are dangerous due to risk of reaction with water. Simpler ideas include fuel pre-heating, which is not advisable as the fuel is much better suitable for the lower exergy part of the cycle.

In order to mitigate these problems, a solution is required which can reduce the heat recovery steam generator inlet temperature preferably from 700°C to 650°C level. To this aim, such solution should be capable of reducing the gas turbine exit temperature and preferably transport the energy to the highest point in the cycle.

### SUMMARY OF THE INVENTION

The object of the present invention is to solve the aforementioned technical problems by providing a combined cycle plant as substantially defined in independent claim 1.

Preferred embodiments are defined in correspondent dependent claims.

According to preferred embodiments, which will be described in the following detailed description only for exemplary and non-limiting purposes, the present solution teaches a combined cycle plant which utilizes thermal recuperation in order to reduce the exit temperature of a high efficiency gas turbine cycle, preferably from 700°C to about 650°C, and injects the recuperated air into a dilution air mixer of a constant pressure sequential combustion system. This way, the use of high cost alloys in the steam cycle is avoided, as well as maintaining a high-efficiency and low-emission cycle.

According to an aspect of the invention, it is provided a combined cycle power plant comprising a compressor for compressing a flow of gas, a gas turbine, a burner for heating the compressed gas, the burner being interposed between the compressor and the gas turbine, a heat recovery steam generator positioned downstream the gas turbine and upstream the heat recovery steam generator and configured to utilize hot exhaust gas to produce steam; the power plant further comprising a heat recuperator located downstream the gas turbine and a spill line for spilling a portion of the gas flow of compressed gas exiting from the compressor, the spill line reaching the heat recuperator, wherein the heat recuperator is configured to lower a temperature of the hot exhaust gas exiting the gas turbine by means of the portion of the gas flow of compressed gas conveyed by the spill line.

According to a preferred aspect of the invention the heat recuperator is adapted to lower the temperature of the hot exhaust gas exiting said gas turbine from substantially 700° to substantially 650°.

According to a preferred aspect of the invention is adapted to raise the temperature of the portion of the gas flow conveyed by the spill line into the heat recuperator from substantially 480° to substantially 680°.

According to a preferred aspect of the invention wherein the spill line is configured to extract a flow of gas which is at least 25% of the flow of compressed gas exiting the compressor.

According to a preferred aspect of the invention the spilt flow of gas exiting the heat recuperator is injected through the spill line into the burner. In an embodiment where the burner comprises a single stage combustor, the spilt flow exiting the heat recuperator is injected upstream the single combustor. In an embodiment where the burner comprises a primary combustor, a reheat combustor and a dilution air mixer arranged there between them, the spilt flow of gas exiting the heat recuperator is injected through the spill line into the dilution air mixer.

### BRIEF DESCRIPTION OF DRAWINGS

The foregoing objects and many of the attendant advantages of this invention will become more readily appreciated as the same becomes better understood by reference to the following detailed description when taken in conjunction with the accompanying drawings, wherein:
Figure 1 shows a schematic diagram of a combined cycle plant according to the known art;
Figure 2 shows a schematic diagram of a combined cycle plant according to a first embodiment of the present invention;
Figure 3 shows a schematic diagram of a combined cycle plant according to a second embodiment of the present invention.

### DETAILED DESCRIPTION OF THE DRAWINGS

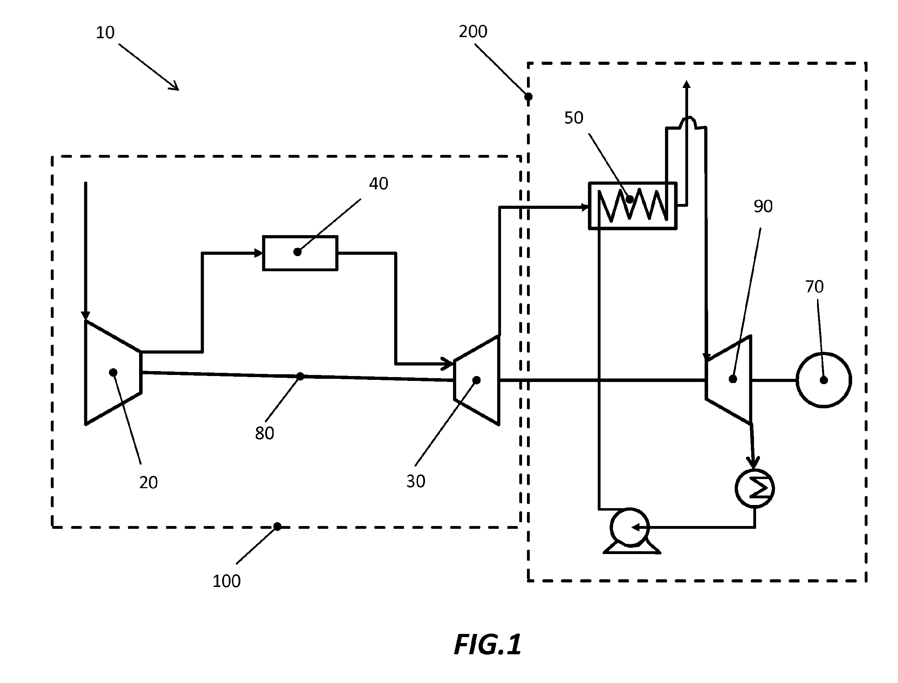

With reference to figure 1, it is showed a combined cycle plant 10 according to the prior art. The combined cycle plant 10 comprises a gas power plant, generally indicated with numeral reference 100, and a steam power plant 200. The gas and the steam power plant cooperate to rotate a shaft 80 which is in turn connected to an electric generator 70 for the production of electricity. The gas power plant 100 comprises a compressor 20, which draws a flow of gas (typically air from the external environment) and drives it, increasing its pressure, to a burner 40 which further energizes it. The burned gas then expands in a gas turbine 30 which rotates a shaft 80 for the production of useful work.

The hot exhaust gas exiting the turbine 30, which typically has a temperature of approximately 700°, is then conveyed into a heat recovery steam generator 50 which utilizes the exhaust heat to produce steam in the steam power plant 200, as indicated in the diagram of the figure. The overheated steam then expands into a steam turbine 90 which cooperates with gas turbine 30 to generate a torque onto the shaft 80 to produce electric energy. As it is clearly visible in the prior art diagram of figure 1, all the compressed air exiting the compressor 20 is driven into the burner 40.

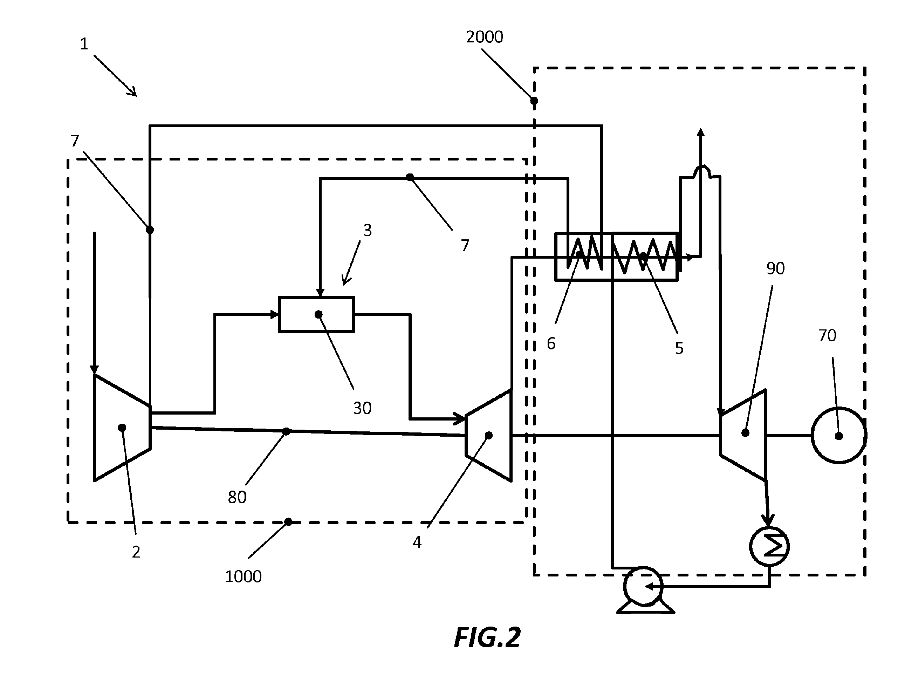

Making now reference to next figure 2, it is shown a schematic diagram of a combined cycle plant 1 according to the present invention. In particular, the combined cycle 1 comprises a gas power plant, indicated with numeral 1000, and a steam power plant 2000, cooperating to confer to a shaft 80 a torque for the production of electric energy at a generator 70. The gas plant 1000 comprises a compressor 2 for compressing a flow of gas, typically air from external environment, which is then driven into a burner 3, interposed between the compressor 2 and a gas turbine 4, which further energizes it. The burned gas then expands into the turbine 4 which rotates the shaft 80 for the production of energy. The hot exhaust gas exiting the gas turbine 3 is then conveyed into a heat recovery steam generator 5, positioned downstream the gas turbine 4 and configured to utilize the hot exhaust gas to produce steam. The steam so produced then evolves into a steam turbine 90 for rotating the shaft 80. According to the present invention, the combined cycle 1 further comprises a heat recuperator 6, located downstream the gas turbine 4 and upstream the heat recovery steam generator 5. A heat recuperator, as a component in this technical field, is known per-se and therefore the knowledge and the technical expertise necessary for its implementation in the combined cycle according to the invention is to be considered within the reach of those who are skilled in the art. The combined cycle 1 further comprises a spill line 7, adapted to spill a portion of the compressed gas flow exiting the compressor 2 and to convey such portion of the compressed gas to the heat recuperator 6. The heat recuperator 6 is then configured to lower a temperature of the hot exhaust gas exiting the gas turbine 3 by means of the portion of the compressed gas flow which is conveyed by the spill line 7, which in turn increase its temperature. A typical exit temperature of the hot exhaust gas is approximately 700°. Advantageously, the heat recuperator 6 is adapted to lower the temperature of the hot exhaust gas from substantially 700° to approximately 650°. Furthermore, the heat recuperator is further adapted, advantageously, such that the reduction of the temperature of the hot exhaust gas is balanced by an increase of temperature of the compressed gas flow conveyed by the spill line 7 from substantially 480° to substantially 680°. As a result, the hot exhaust gas entering into the heat recovery steam generator 5 has a lower temperature, achieved by the heat recuperator 6 which accomplishes a heat exchange between the hot exhaust gas exiting the gas turbine 4 and the compressed gas spilt from the compressor 2, which is conveyed to the heat recuperator 6 be means of the spill line 7.

Preferably, the spill line 7 is configured to extract a flow of gas which is around the 25% of the total flow of compressed gas exiting the compressor 2.

Still with reference to figure 2, according to a further preferred aspect of the present invention, the spilt gas flow exiting the heat recuperator 6 is injected through the spill line 7 into the burner 3. In the embodiment depicted in figure 2 the combined cycle plant 1 comprises a single stage combustor 30. As a non-limiting example, compressed gas flow may be injected upstream the single stage combustor 30, in particular through a cooling arrangement of the combustor. An example of such a combustor having a near wall cooling arrangement, through which the split gas flow might be re-inserted into the cycle also achieving an advantageous cooling effect, is disclosed in publication EP 2 738 469 A1, which is herewith incorporated by reference.

The pressure drop which is experienced in the cooling portion of the single stage combustor 30 is typically around 2.5%. Therefore, in order to avoid pressure gradients within the cooling arrangement of the combustor 30, the spill line is configured to confer to the gas flow an equal pressure drop during its travel from the compressor 2 to the combustor 30 through the heat recuperator 6.

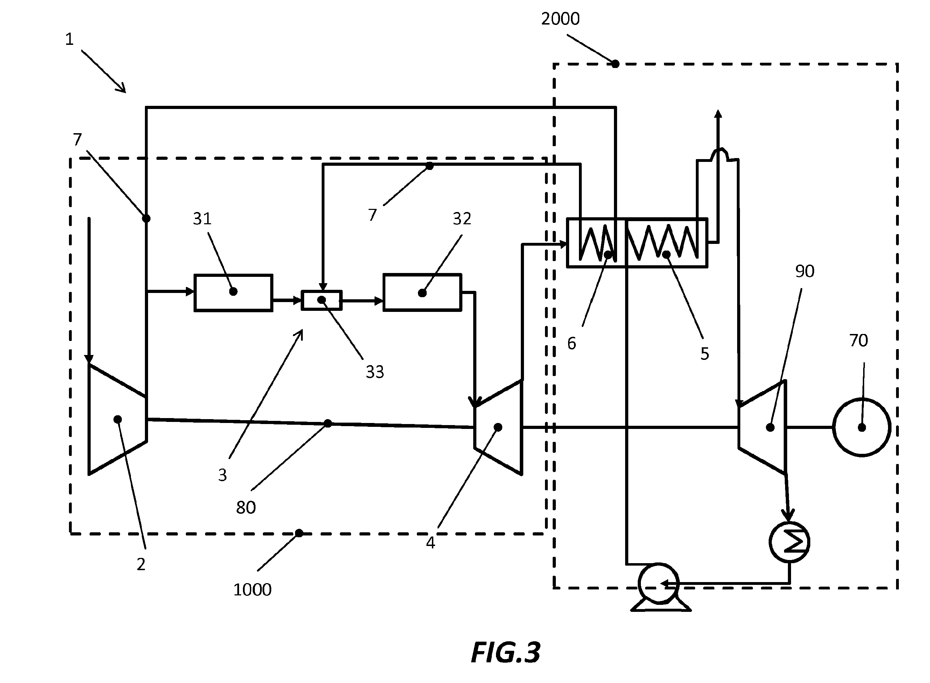

Making now reference to figure 3, it is shown a combined cycle plant 1 according to the invention, where the burner 3 comprises a primary combustor 31, a reheat combustor 32 and a dilution air mixer 33. Such a sequential combustor is known to those who are skilled in the art, and some examples are disclosed in US 2014/0033728, WO 2011/061059 and EP 2 722 508, which are herewith incorporated by reference.

Preferably, the spilt gas flow exiting the heat recuperator 6 is injected into the burner 3 through the air dilution mixer 33. An example of an arrangement where dilution air is mixed with a hot main flow in a sequential combustion is disclosed in publication US 2014/0053566, which is here incorporated by reference. Similarly to the embodiment having a single stage combustor, the spill line 7 is configured to ensure a similar pressure drop of the gas flow running through it to the one experienced by the compressed air flow exiting the primary combustor 31 of the burner 3.

Although the present invention has been fully described in connection with preferred embodiments, it is evident that modifications may be introduced within the scope thereof, not considering the application to be limited by these embodiments, but by the content of the following claims.

## Claims

1. A combined cycle power plant (1) comprising:
- a compressor (2) for compressing a flow of gas;
- a gas turbine (3);
- a burner (4) for heating said compressed gas, the burner (4) being interposed between said compressor (2) and said gas turbine (3);
- a heat recovery steam generator (5) positioned downstream said gas turbine (3) and configured to utilize hot exhaust gas to produce steam;
the power plant (1) being ***characterized in that*** it comprises:
- a heat recuperator (6) located downstream said gas turbine (3) and upstream said heat recovery steam generator (5);
- a spill line (7) for spilling a portion of the gas flow of compressed gas exiting from said compressor (2), the spill line (7) reaching said heat recuperator (6);
wherein said heat recuperator (6) is configured to lower a temperature of the hot exhaust gas exiting the gas turbine (3) by means of said portion of the compressed gas conveyed by said spill line (7).

2. The combined cycle power plant (1) according to the preceding claim, wherein said heat recuperator (6) is adapted to lower the temperature of said hot exhaust gas exiting said gas turbine (3) from substantially 700° to substantially 650°.

3. The combined cycle power plant (1) according to claims 1 or 2, wherein said heat recuperator (6) is adapted to raise the temperature of said portion of the gas flow conveyed by the spill line (7) into the heat recuperator (6) from substantially 480° to substantially 680°.

4. The combined cycle power plant (1) according to any of the preceding claims, wherein said spill line (7) is configured to extract a flow of gas which is at least 25% of the flow of compressed gas exiting the compressor (2).

5. The combined cycle power plant (1) according to any of the preceding claims, wherein the spilt flow of gas exiting the heat recuperator (6) is injected through said spill line (7) into said burner (3).

6. The combined cycle power plant (1) according to the preceding claim, wherein said burner (3) comprises a single stage combustor (31).

7. The combined cycle power plant (1) according to the preceding claim, wherein said spilt flow of gas exiting the heat recuperator (6) is injected into said burner (3) upstream said single stage combustor (31).

8. The combined cycle power plant (1) according to any of the claims 1 to 5, wherein said burner (3) comprises a primary combustor (32), a reheat combustor (33) and a dilution air mixer (34) arranged between them.

9. The combined cycle power plant (1) according to claim 8, wherein the spilt flow of gas exiting the heat recuperator (6) is injected through said spill line (7) into said dilution air mixer (33).
